# EUROPEAN PATENT SPECIFICATION

(11) **EP 2 162 042 B1**
(45) Date of publication and mention of the grant of the patent: **15.02.2017**
(21) Application number: 07793700.1
(22) Date of filing: 27.08.2007
(51) Int. Cl.: A47L 9/28

(54) **CLEANER AND METHOD FOR DRIVING THE SAME**
REINIGUNGSVORRICHTUNG UND ANTRIEBSVERFAHREN DAFÜR
APPAREIL DE NETTOYAGE ET PROCÉDÉ PERMETTANT D'ACTIONNER CELUI-CI

(30) Priority: 01.06.2007 KR 20070053851
(43) Date of publication of application: 17.03.2010
(73) Proprietor: LG Electronics Inc., Yeongdeungpo-gu Seoul 07336 (KR)
(72) Inventor: KIM, Sang-Young, Gwangmyeong-si Gyeonggi-do 423-762 (KR); YOO, Myung-Keun, Nowon-gu Seoul 139-053 (KR); AHN, Kwang-Woon, Seoul 701-032 (KR); SHIN, Hyoun-Jeong, Incheon 405-243 (KR)
(74) Representative: Ter Meer Steinmeister & Partner
(86) International application number: PCT/KR2007/004104
(87) International publication number: WO 2008/146985

(56) References cited:
- JP-A- 2001 321 310
- KR-A- 20020 026 970
- KR-A- 20060 034 851
- US-A- 5 596 236
- US-A1- 2004 088 817
- US-B1- 6 448 732

## Description

### Technical Field

The present disclosure relates to a power control system for controlling a voltage supplied to a motor. More particularly, the present disclosure relates to a power control system for controlling a voltage supplied to a motor for use in a vacuum cleaner.

### Background Art

The present disclosure relates to a cleaner for collecting pollutant particles such as dust and dirt and a method for driving the cleaner.

A cleaner makes it possible to clean a desired region without scattering pollutant particles such as dust and dirt. The reason for this is that the cleaner collects (or traps) pollutant particles by inhalation (suction). In order to collect pollutant particles, the cleaner has a collecting fan that is rotated by an electric motor.

The cleaner uses an AC voltage of about 110 V or 220 V or a DC voltage of a battery to drive the collecting fan. That is, cleaners are classified into an AC voltage cleaner and a DC voltage cleaner.

The AC voltage cleaner is equipped with a power cord for receiving the AC voltage. This power cord, however, restricts a possible cleaning region that can be cleaned using the cleaner. Thus, when a wide region needs to be cleaned, a user of the cleaner must repeat reconnection of the power cord.

The DC voltage cleaner restricts the possible time during which the cleaner may be used. In actuality, the DC voltage cleaner can be used only when a battery is charged with a voltage. Upon completion of discharge of the battery, the DC voltage cleaner cannot be used until the battery is charged with a voltage.

US 2004/088817 A1 describes a wet/dry utility vacuum with a canister, a powerhead assembly with a fan, a shut-off device that prevents the fan from drawing liquids into the fan inlet when a volume of the liquid in the canister exceeds a predetermined volume. The powerhead assembly includes a controller that permits the utility vacuum to be operated in a desired power mode so that the user may employ either an AC power source or a DC power source, such as a battery pack, for example. In some applications, the battery pack may be interchangeable with the battery packs of various cordless tools, including drill/drivers and saws. A tool set and a method for operating a battery-powered tool set are also provided.

### Disclosure of Invention

### Technical Problem

Embodiments provide a cleaner that can be operated by a battery voltage as well as by an AC voltage, and a method for driving the cleaner.

Embodiments also provide a cleaner whose AC and DC voltage modes can be automatically switched, and a method for driving the cleaner.

Embodiments also provide a cleaner whose battery can be actively charged.

### Technical Solution

The object is solved by the features of the independent claims. Preferred embodiments are provided in the dependent claims.

In one embodiment, a cleaner includes: a motor for rotating a collecting fan; a battery; a voltage converter for converting an AC voltage received from a power source into a DC voltage; an active voltage selector for selecting a voltage of the battery and the DC voltage; and a motor driver for driving the motor using the voltage selected by the active voltage selector.

In another embodiment, a cleaner includes a motor for rotating a collecting fan; a battery; a voltage converter for converting an AC voltage received from a power source into a DC voltage; a motor driver for driving the motor using one of a voltage of the battery and the DC voltage depending on whether the AC voltage is received; and a forcible interrupter for temporarily disconnecting the motor driver from the motor depending on whether the AC voltage is received.

In further another embodiment, a method for driving a cleaner includes converting an AC voltage received from a power source into a DC voltage; actively switching a voltage of a battery and the DC voltage selectively; and driving a motor using the actively-switched voltage.

The method may further include detecting whether the AC voltage is received. In this case, the driving of the motor include: dropping the actively switched voltage; and generating at least two phase voltage signals to be provided to the motor, by using one of the dropped voltage and the actively switched voltage depending on the detection results for the AC voltage.

The details of one or more embodiments are set forth in the accompanying drawings and the description below. Other features will be apparent from the description and drawings, and from the claims.

### Advantageous Effects

The cleaner according to the present disclosure actively selects the voltage of the battery and the DC voltage converted from the AC voltage and drives the switched reluctance motor by the selected voltage. Accordingly, the cleaner according to the present disclosure can automatically switch the AC voltage mode and the DC voltage mode and can increase the convenience of the user.

The cleaner according to the present disclosure uses the switched reluctance motor that has the sufficiently-low characteristic impedance to generate the desired rotational force by the voltage of the battery. Also, in the AC voltage mode where the AC voltage is supplied, the cleaner according to the present disclosure drops the DC voltage of about 310 V to about 28 to 50 V (i.e., the voltage of the battery) and supplies the same voltage to the switched reluctance motor. Accordingly, the switched reluctance motor can generate the desired rotational force by the voltage of the battery as well as by the AC voltage. Likewise, the collecting fan can generate the inhalation force with the desired strength by using the voltage of the battery as well as by using the AC voltage. Consequently, the cleaner according to the present disclosure can have the sufficiently-high capability of collecting pollutant particles and can reduce the time taken to clean up pollutant particles using the voltage of the battery 12 to about the time taken to clean up the pollutant particles using the AC voltage.

In addition, the cleaner according to the present disclosure goes through the temporary stop mode for preventing the excessively-high voltage from being applied to the low-characteristic-impedance motor, before entry into the AC voltage mode. Accordingly, the cleaner according to the present disclosure can interrupt the excessive voltage driving that may occur in the switching operation between the AC voltage mode and the DC voltage mode, thereby making it possible to prevent the occurrence of breakdown, malfunction and component damage.

### Brief Description of the Drawings

The accompanying drawings are intended to provide a further understanding of the present disclosure. In the drawings:
Fig. 1 is a block diagram of a cleaner according to an embodiment;
Figs. 2 to 4 are waveform diagrams of motor driving signals that are provided to a motor;
Fig. 5 is a block diagram of an embodiment of a forcible interrupter illustrated in Fig. 1;
Fig. 6 is a waveform diagram of an I/O signal of each part in Fig. 5; and
Fig. 7 is a block diagram of another embodiment of the forcible interrupter illustrated in Fig. 1.

### Mode for the Invention

Reference will now be made in detail to the embodiments of the present disclosure, examples of which are illustrated in the accompanying drawings. Wherever possible, the same reference numbers will be used throughout the drawings to refer to the same or like parts.

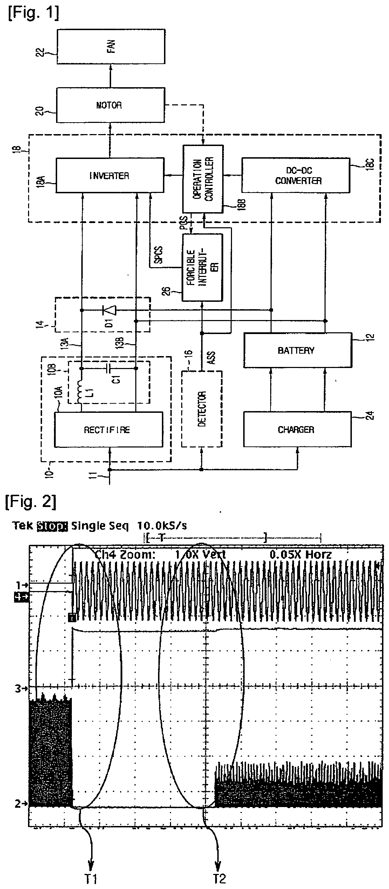

Fig. 1 is a block diagram of a cleaner according to an embodiment.

Referring to Fig. 1, the cleaner includes a battery 12 and an AC-DC converter 10 for converting an AC voltage into a DC voltage. The AC voltage is received from a conventional source, such as, for example, a power utility company, a power generator, or any other entity and/or device capable of generating an AC voltage.

The AC-DC converter 10 converts an AC voltage (e.g., 220 V), which is received from a power cord 11, into a DC voltage. The power cord 11 transmits the AC voltage received from a voltage source (not illustrated) to the AC-DC converter 10. When the AC voltage is provided through the power cord 11, an output DC voltage of the AC-DC converter 10 (hereinafter referred to as "first DC voltage") has a high voltage level of about 310 V. For this voltage conversion, the AC-DC converter 10 includes a rectifier 10A and a smoother 10B connected in series to the power cord 11. The rectifier 10A full-wave rectifies or half-wave rectifies the AC voltage received from the power cord 11, thereby outputting a ripple voltage. The smoother 10B smoothes the ripple voltage from the rectifier 10A to generate the first DC voltage. To this end, the smoother 10B includes a choke coil L1 connected between a high-voltage line 13A and a high-voltage output terminal of the rectifier 10A, and a capacitor C1 connected between the high-voltage line 13A and a base-voltage line 13B. The choke coil L1 suppresses a ripple component contained in the ripple voltage that will be provided from the high-voltage output terminal of the rectifier 10A to the high-voltage line 13A. The capacitor C1 is charged and discharged depending on the suppressed ripple voltage from the choke coil L1 such that the first DC voltage of about 310 V is applied on the high-voltage line 13A. The first DC voltage output from the smoother 10B is provided to an active voltage selector 14.

The battery 12 supplies its charged DC voltage to the active voltage selector 14. The charged DC voltage of the battery 12 (hereinafter referred to as "second DC voltage") has a low voltage level of about 28 to 50 V. In order to generate the second DC voltage with a low voltage level of about 28 to 50 V, the battery 12 includes about 24 to 30 charge cells. Ni-MH charge cells may be used as the charge cells of the battery 12.

The active voltage selector 14 monitors whether the first DC voltage is received from the AC-DC converter 10. Depending on whether the first DC voltage is received, the active voltage selector 14 provides one of the second DC voltage from the battery 12 and the first DC voltage from the AC-DC converter 10 to an inverter 18A of a motor driver 18. When the first DC voltage is not received from the AC-DC converter 10 (i.e., in a DC voltage mode), the active voltage selector 14 provides the second DC voltage from the battery 12 to the inverter 18A of the motor driver 18. On the other hand, when the first DC voltage is received from the AC-DC converter 10 (i.e., in an AC voltage mode), the active voltage selector 14 provides the first DC voltage to the inverter 18A of the motor driver 18. To this end, the active voltage selector 14 includes a unidirectional element(for example, diode D1) that is connected between a high-voltage output terminal of the battery 12 and the high-voltage line 13A (specifically, a connection node between the choke coil L1 and a high-voltage input terminal of the inverter 18A). When a voltage on the high-voltage line 13A is higher than a voltage on the high-voltage output terminal of the battery 12 (i.e., in the AC voltage mode where the first DC voltage is provided to the high-voltage line 13A), the diode D1 is turned off to interrupt the second DC voltage to be provided from the battery 12 to the inverter 18A. At this point, the first DC voltage is provided from the AC-DC converter 10 to the inverter 18A. On the other hand, when a voltage on the high-voltage line 13A is lower than a voltage on the high-voltage output terminal of the battery 12 (i.e., in the DC voltage mode where the first DC voltage is not provided to the high-voltage line 13A), the diode D1 is turned on to provide the second DC voltage from the battery 12 to the inverter 18 A. The active voltage selector 14 may further include an additional diode that is connected between the choke coil L1 and the high- voltage line 13 A (specifically, a connection node between the diode D1 and the high- voltage input terminal of the inverter 18A). The additional diode prevents the second DC voltage from the battery 12 from leaking to the AC-DC converter 10, thereby increasing the available time (i.e., the discharge period) of the battery 12.

The cleaner further includes a detector 16 connected to the power cord 11, and a serial circuit of a motor 20 and a collecting fan 22 connected the motor driver 18. The detector 16 detects whether the AC voltage is supplied through the power cord 11. Depending on the detection results, the detector 16 provides a controller 18B of the motor driver 18 with an AC voltage detection signal ASS having one of a high logic voltage and a low logic voltage(i.e., a base voltage). When the AC voltage is supplied through the power cord 11, the detector 16 provides the controller 18B with an AC voltage detection signal with a high logic voltage for indicating or designating the AC voltage mode. On the other hand, when the AC voltage is not supplied through the power cord 11, the detector 16 provides the controller 18B with an AC voltage detection signal with a low logic voltage for indicating or designating the DC voltage mode. To this end, the detector 16 includes a diode for rectification and resistors for voltage division. Alternatively, the detector 16 may detect a voltage on an output terminal of the AC-DC converter 10 to determine whether the AC voltage is supplied. In this case, there may be an error in the determination by the detector 16 or the circuit configuration of the detector 16 may be complex.

Further alternatively, the detector 16 may be implemented using a program operating in the controller 18B. In this case, the controller 18 may be electromagnetically connected to the power cord 11.

Depending on the logic voltage levels of the AC voltage detection signal ASSfrom the detector 16, the motor driver 18 drives the motor 20 in one of a pulse width modulation (PWM) mode and a pulse trigger mode. When the AC voltage detection signal ASS of a high logic voltage is received from the detector 16 (i.e., in the AC voltage mode), the motor driver 18 drives the motor 20 in a pulse trigger mode so that an average voltage provided to the motor 20 can be about 28 to 50 V that is identical to the second DC voltage from the battery 12. That is, when the AC voltage is supplied (i.e., in the AC voltage mode), the motor driver 18 drops the first DC voltage of about 310 V from the AC-DC converter 10 to about 28 to 50 V (i.e., the second DC voltage from the battery 12). In this case, the period of a trigger pulse applied to the motor 20 is minutely increased/decreased depending on the rotation period (or rotation speed) of the motor 20 while the width of the trigger pulse is maintained at a constant value independent of the rotation period of the motor 20, thereby adjusting the rotation speed (i.e., the rotational force) of the motor 20. On the other hand, when the AC voltage detection signal ASS of a low logic voltage is received from the detector 16 (i.e., in the DC voltage mode), the motor driver 18 drives the motor 20 in a PWM mode so that the second DC voltage from the battery 12 is used, as it is, to drive the motor 20. The rotation speed of the motor 20 may be adjusted according to the duty rate of a PWM component. When the duty rate of the PWM component increases, the rotation speed (i.e., the rotational force) of the motor 20 increases. To the contrary, when the duty rate of the PWM component decreases, the rotation speed (i.e., the rotational force) of the motor 20 decreases. In order to adjust the rotation speed (i.e., the rotation force) of the motor 20, the motor driver 18 may respond to key switches for output selection (not illustrated).

In order to generate a phase voltage signal of PWM mode or pulse trigger mode to be provided to the motor, the motor driver 18 includes the controller 18B for controlling an inverting operation of the inverter 18 A. Under the control of the controller 18B, the inverter 18A switches the selected DC voltage (i.e., the first or second DC voltage) from the active voltage selector 14 in a pulse trigger mode or a PWM mode to generate at least two phase voltage signals. In the DC voltage mode, the inverter 18A generates at least two phase voltage signals that have a PWM component at every predetermined period (e.g., the rotation period of the motor 20). The phase voltage signals have a PWM component in rotation. The duty rate of the PWM component is adjusted according to the rotation speed (or the rotational force) of the motor 20, which is set by a user. In the AC voltage mode, the inverter 18 A generates at least two phase voltage signals that have a high trigger pulse at every predetermined period (e.g., the rotation period of the motor 20). The high trigger pulses of the phase voltage signals have a phase difference corresponding to "the number of 3607phase voltage signals". The width of the trigger pulse is fixed independently of the rotation period (or the rotation speed) of the motor 20, while the period of the trigger pulse is minutely adjusted according to the rotation period (or the rotation speed) of the motor 20, so that the motor 20 rotates at the speed set by the user (or generates the rotational force set by the user).

In response to the AC voltage detection signal ASS from the detector 16, the controller 18B provides the inverter 18A with at least two phase control signals PCSs that have a PWM component in rotation or have a trigger pulse at every predetermined period (e.g., the rotation period of the motor 20). In the DC voltage mode where the AC voltage detection signal ASS with a low logic voltage is generated by the detector 16, the phase control signals PCSs generated by the controller 18B alternately have a PWM component for a predetermined period (i.e., a period corresponding to "the number of 3607phase voltage signals") per the rotation period of the motor 20. The duty rate of the PWM component is adjusted according to the desired rotation speed (or rotational force) of the motor 20. In the AC voltage mode where the AC voltage detection signal ASS with a high logic voltage is generated by the detector 16, the phase control signals PCSs from the controller 18B have one high trigger pulse per the rotation period of the motor 20. The high trigger pulses contained in the phase control signals PCSs have a phase difference corresponding to "the number of 3607phase voltage signals". In addition, the width of the trigger pulse contained in each of the phase control signals PCSs may be fixed independently of the desired rotation speed (or rotational force) of the motor 20 while the period of the trigger pulse in each of the phase control signals may be minutely adjusted according to the desired rotation speed (or rotational force) of the motor 20. According to an increase or decrease in the rotation period of the motor 20, the trigger pulse with the fixed width and the minutely adjusted period changes the average level of the voltage supplied to the motor 20, thereby increasing or decreasing the rotational force of the motor 20. In order to generate the phase control signals PCSs, the controller 18B responds to at least two phase sensing signals PSSs from the motor 20. For example, the controller 18B generates the first phase control signal PCS on the basis of the first phase sensing signal and also generates the second phase control signal PCS on the basis of the second phase sensing signal. For example, in the AC voltage mode, the controller 18B controls a falling (or rising) edge of the first phase control signal PCS to coincide with a falling (or rising) edge of the first phase sensing signal PSS and also controls a falling (or rising) edge of the second phase control signal PCS to coincide with a falling (or rising) edge of the second phase sensing signal PSS. In the DC voltage mode, the controller 18B controls the first phase control signal PCS to contain a PWM component for a high- voltage (or low-voltage) period of the first phase sensing signal PSS and also controls the second phase control signal PCS to contain a PWM component for a high- voltage (or low-voltage) period of the second phase sensing signal PSS.

The controller 18B may respond to a start sensing signal and an operation sensing signal as well as to the phase sensing signals PSSs. On the basis of the start sensing signal, the controller 18B controls the trigger pulse period and the PWM component duty rate of the phase control signals PCSs to have a great value until the motor 20 rotates at a desired rotation speed. When the rotation speed of the motor 20 reaches the desired rotation speed, the controller 18B control the trigger pulse period and the PWM component duty rate of the phase control signals PCSs, which will be provided to the inverter 18 A, to have a value corresponding to the desired rotation speed. On the basis of the period of the operation sensing signal, the controller 18B controls the trigger pulse period to have a value corresponding to the desired rotation speed. The phase of the operation sensing signal is earlier by 30 to 50 than the phase of the start sensing signal. The phase difference between the operation sensing signal and the start sensing signal is determined by the arrangement of a operation sensing sensor and a start sensing sensor included in the motor 20. For example, a central processing unit (CPU) or a microcomputer may be used as the controller 18B.

The motor driver 18 further includes a DC-DC converter 18C that is connected between the battery 12 and the controller 18B. The DC-DC converter 18C down-converts (level-shifts) the second DC voltage of the battery 12 to a transistor logic voltage (e.g., the first DC voltage of about 5 V). The transistor logic voltage generated by the DC-DC converter 18C is provided to the controller 18B so that the controller 18B can operate stably. In order to generate the transistor logic voltage stably using the second DC voltage, the DC-DC converter 18C includes a switched-mode power supply (SMPS). Alternatively, the DC-DC converter 18C may include a resistor-based voltage divider.

The motor 20 is driven by phase voltage signals PVSs from the inverter 18A of the motor driver 18 to generate rotational force (i.e., rotational torque) that will be transmitted to the collecting fan 22. A switched reluctance motor of at least two phases is used as the motor 20. The switched reluctance motor 20 generates the at least two phase sensing signals. For example, two phase sensing signals are generated by the switched reluctance motor 20. The switched reluctance motor 20 also generates the start sensing signal and the operation sensing signal as well as the phase sensing signals. The phase of the start sensing signal is later by 30 to 50 than the phase of the first phase sensing signal and is earlier by 40 to 60 than the phase of the second phase sensing signal. The operation sensing signal has the same phase and period as one of the phase sensing signals. The operation sensing signal generated by the switched reluctance motor 20 has the same phase and period as the first phase sensing signal. When the voltage of the battery 12 (i.e., the second DC voltage of 28 to 50 V) is used, the switched reluctance motor 20 has at least two coils with a characteristic impedance that is low enough to rotate the motor at a desired rotation speed (or to generate a desired rotational force). For example, the first and second coils in the switched reluctance motor 20 are alternately excited by the first and second phase voltage signals. Accordingly, the switched reluctance motor 20 is rotated at a desired rotation speed (e.g., 7000 to 9000 rpm) by PWM-mode phase voltage signals as well as by trigger-pulse-mode phase voltage signals with an average voltage of 28 to 50 V, thereby generating the rotational force with a desired strength. The use of the PWM-mode phase voltage signals can solve the problem of heat that is generated when the motor 20 rotates at a speed of 7000 to 9000 rpm in the AC voltage mode. In addition, the switched reluctance motor 20 with the low-characteristic-impedance coils is rotated at a desired speed by the phase voltage signal of a PWM component, thereby making it possible to generate a desired rotational force by the voltage of the battery 12 as well as by the AC voltage.

The collecting fan 22 is rotated by the rotational force (or rotational torque) of the motor 20 to generate inhalation (suction) force. This inhalation force causes pollutant particles (e.g., dust and dirt) to be collected into the collecting space (not illustrated) of the cleaner. The rotational force with a desired strength is supplied from the switched reluctance motor 20 with the low-characteristic-impedance coils by using the voltage of the battery 12 as well as by using the AC voltage. Accordingly, the collecting fan 22 can generate the inhalation force with a desired strength by using the voltage of the battery 12 as well as by using the AC voltage, thereby making it possible to reduce the time taken to clean up pollutant particles using the voltage of the battery 12 to about the time taken to clean up the pollutant particles using the AC voltage.

The cleaner further includes a charger 24 connected between the power cord 11 and the battery 12, and a forcible interrupter 26 connected between the controller 18B and the inverter 18 A. In the AC voltage mode where the AC voltage is supplied through the power cord 11, the charger 24 performs a rectifying/smoothing operation to convert the AC voltage into a DC voltage. In addition, the charger 16 supplies the DC voltage to the battery 12 to charge the battery 12.

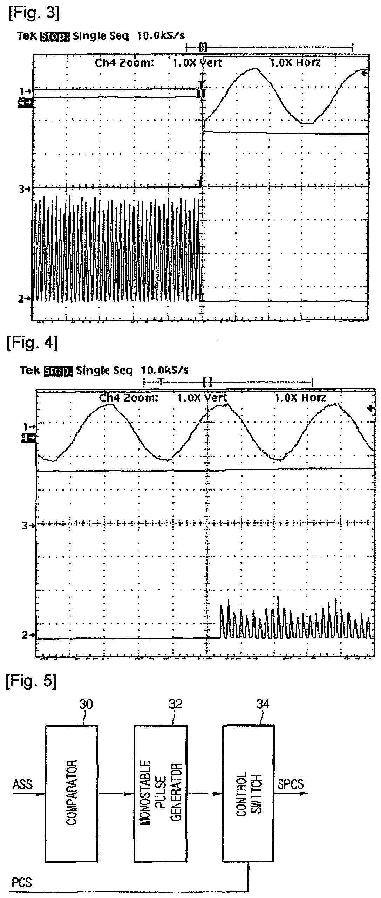

On the basis of the AC voltage detection signal ASS from the detector 16, the forcible interrupter 26 detects the time point when the first DC voltage converted from the AC voltage starts to be used instead of the second DC voltage of the battery 12. During a predetermined time from the time point when the first DC voltage converted from the time point when the AC voltage starts to be used instead of the second DC voltage of the battery 12, the forcible interrupter 26 interrupts at least two phase control signals PCSs to be provided from the controller 18B to the inverter 18 A, outputting a forcible interrupt phase control signal SPCS so that the phase voltage signal is not provided from the inverter 18A to the switched reluctance motor 20. Accordingly, the switched reluctance motor 20 is not driven during the predetermined time from the time point when the first DC voltage converted from the time point when the AC voltage starts to be used instead of the second DC voltage of the battery 12 (i.e., the time point of change from the DC voltage mode into the AC voltage mode). As illustrated in Fig. 2, from the time when the AC voltage is supplied from a time point T1, the first DC voltage from the AC-DC converter 10, instead of the second DC voltage of the battery 12, is provided to the inverter 18 A. During a predetermined period from the time point T1 to a time point T2, the forcible interrupter 26 interrupts at least two phase voltage signals PCSs to be provided from the controller 18B to the inverter 18 A, so that the phase voltage signal is not provided to the switched reluctance motor 20. From the time point T2, the forcible interrupter 26 provides at least two phase voltage signals from the controller 18B to the inverter 18A such that the switched reluctance motor 20 is driven by at least two phase voltage signals. In addition, the switched reluctance motor 20 is driven by the phase voltage signal of a PWM component till the time point T1 as illustrated in Fig. 3, while it is driven by the phase voltage signal of a trigger pulse after the time point T2 as illustrated in Fig. 4. This is to prevent the first DC voltage (converted from the AC voltage) from being inverted by the PWM -mode phase voltage signal because the controller 18B is late in detecting the time point of change from the DC voltage mode into the AC voltage mode. In result, the generation of the phase voltage signal of an excessively-high voltage, which may be generated during a predetermined period from the time point of change from the DC voltage mode into the AC voltage mode, is suppressed to prevent damage to the low-characteristic-impedance coils of the switched reluctance motor 20.

Fig. 5 is a block diagram of an embodiment of the forcible interrupter 26 illustrated in Fig. 1.

Referring to Fig. 5, the forcible interrupter 26 includes a comparator 30, a monostable pulse generator 32, and a control switch 34.

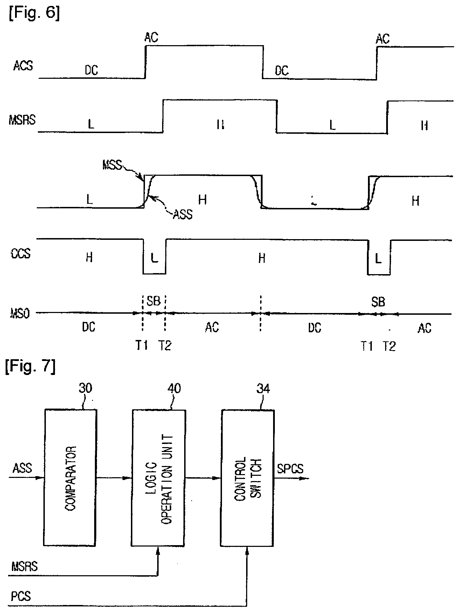

The comparator 30 compares the AC voltage detection signal ASS from the detector 16 (Fig. 1) with a predetermined reference voltage (not illustrated) to generate a mode switch signal MSS. The mode switch signal MSS has a high logic level while the AC voltage is being supplied to the power cord 11, but has a low logic level while the AC voltage is not being supplied to the power cord 11. As illustrated in Fig. 6, in synchronization with the mode switch signal MSS, the active voltage selector 14 (Fig. 1) alternately selects the DC voltage of the battery 12 and the first DC voltage converted from the AC voltage.

The monostable pulse generator 32 generates a gate control signal GCS with a gate pulse of a low (or high) logic level during a predetermined period from a rising edge of the mode switch signal MSS (i.e., the time point T1 when the AC voltage is supplied) to the time point T2. The width of the gate pulse in the gate control signal GCS is preset by the manufacturer to the extent that the user cannot detect the stop of the switched reluctance motor 20.

Depending on the logic value of the gate control signal GCS from the monostable pulse generator 32, the control switch 34, which outputs an SPCS control signal, interrupts at least two phase control signals PCSs from the controller 18B (Fig. 1) or provides the same to the inverter 18A (Fig. 1). For example, during the period of a logically-low gate pulse in the gate control signal GCS (i.e., the time period from the time point T1 to the time point T2), the control switch 34 interrupts at least two phase control signals to be provided from the controller 18B to the inverter 18 A. Accordingly, as in MSO of Fig. 6, during the predetermined period (T1 T2) from the time point T1 (when the AC voltage starts to be supplied to the power cord 11) to the time point T2, the switched reluctance motor 20 is in a standby (SB) mode where it is not driven. This SB mode is to prevent the first DC voltage (converted from the AC voltage) from being inverted by the PWM-mode phase voltage signal because the controller 18B is late in detecting the time point of change from the DC voltage mode into the AC voltage mode. In result, the generation of the phase voltage signal of an excessively-high voltage, which may be generated during a predetermined period from the time point of change from the DC voltage mode into the AC voltage mode, is suppressed to prevent damage to the low-characteristic-impedance coils of the switched reluctance motor 20.

Fig. 7 is a block diagram of another embodiment of the forcible interrupter 26 illustrated in Fig. 1. The forcible interrupter of Fig. 7 is similar to the forcible interrupter of Fig. 5 with the exception that it includes a logic operation unit 40 instead of the monostable pulse generator 32. A description of the same components as in Fig. 5 will be omitted for simplicity of description.

The logic operation unit 40 receives a mode switch recognition signal MSRS from the controller 18B (Fig. 1) as well as the mode switch signal MSS from the comparator 30. The controller 18B generates the mode switch recognition signal MSRS by determining the supply period of the AC voltage on the basis of the AC voltage detection signal ASS from the detector 16. That is, because the controller 18B performs a logic operation, it generates the mode switch recognition signal MSRS by detecting the time point when the AC voltage starts to be supplied, after the elapse of the predetermined period (T1 - T2). Using the mode switch signal MSS and the mode switch recognition signal MSRS, the logic operation unit 40 generates the gate control signal GCS for setting the period of the SB mode, as illustrated in Fig. 6. To this end, the logic operation unit 40 exclusive-ORs or exclusive-NORs the mode switch signal MSS and the mode switch recognition signal MSRS, and ORs or ANDs the result and one of the mode switch signal MSS and the mode switch recognition signal MSRS.

Then, during the period of a logically-low gate pulse in the gate control signal GCS from the monostable pulse generator 32 (i.e., the period from the time point T1 to the time point T2) the control switch 34 interrupts at least two or more signals to be provided from the controller 18B to the inverter 18 A. Accordingly, as in MSO of Fig. 6, during the predetermined period (T1 T2) from the time point T1 (when the AC voltage starts to be supplied to the power cord 11) to the time point T2, the switched reluctance motor 20 is in a standby (SB) mode where it is not driven. This SB mode is to prevent the first DC voltage (converted from the AC voltage) from being inverted by the PWM-mode phase voltage signal because the controller 18B is late in detecting time point of change from the DC voltage mode into the AC voltage mode. In result, the generation of the phase voltage signal of an excessively-high voltage, which may be generated during a predetermined period from the time point of change from the DC voltage mode into the AC voltage mode, is suppressed to prevent damage to the low-characteristic-impedance coils of the switched reluctance motor 20.

As described above, the cleaner according to the present disclosure actively selects the voltage of the battery and the DC voltage converted from the AC voltage and drives the switched reluctance motor by the selected voltage. Accordingly, the cleaner according to the present disclosure can automatically switch the AC voltage mode and the DC voltage mode and can increase the convenience of the user.

The cleaner according to the present disclosure uses the switched reluctance motor that has the sufficiently-low characteristic impedance to generate the desired rotational force by the voltage of the battery. Also, in the AC voltage mode where the AC voltage is supplied, the cleaner according to the present disclosure drops the DC voltage of ab out 310 V to about 28 to 50 V (i.e., the voltage of the battery) and supplies the same voltage to the switched reluctance motor. Accordingly, the switched reluctance motor can generate the desired rotational force by the voltage of the battery as well as by the AC voltage. Likewise, the collecting fan can generate the inhalation force with the desired strength by using the voltage of the battery as well as by using the AC voltage. Consequently, the cleaner according to the present disclosure can have the sufficiently-high capability of collecting pollutant particles and can reduce the time taken to clean up pollutant particles using the voltage of the battery 12 to about the time taken to clean up the pollutant particles using the AC voltage.

In addition, the cleaner according to the present disclosure goes through the temporary stop mode for preventing the excessively-high voltage from being applied to the low-characteristic-impedance motor, before entry into the AC voltage mode. Accordingly, the cleaner according to the present disclosure can interrupt the excessive voltage driving that may occur in the switching operation between the AC voltage mode and the DC voltage mode, thereby making it possible to prevent the occurrence of breakdown, malfunction and component damage.

### Industrial Applicability

The cleaner according to the present disclosure is industrially applicable because it can have the sufficiently-high capability of collecting pollutant particles and can reduce the time taken to clean up pollutant particles using the voltage of the battery 12 to about the time taken to clean up the pollutant particles using the commercial AC voltage.

## Claims

1. A cleaner, comprising:
a motor (20) configured to rotate a collecting fan (22);
a battery (12) configured to provide a first DC voltage;
a voltage converter (10) configured to convert an AC voltage received from a power source into a second DC voltage;
a voltage selector (14) configured to select one of the first DC voltage and the second DC voltage; and
a driver (18) configured to drive the motor using the selected voltage,
**characterized in that**
the driver (18) is configured to selectively drop the selected voltage based on a status of the AC voltage and to drive the motor (20) using the selectively dropped voltage,
the driver (18) comprises:
an inverter (18A) configured to generate at least two phase voltage signals to be supplied to the motor (20) using the selected voltage; and
a controller (18B) configured to control the inverter (18A) to selectively drop an average voltage of the at least two phase voltage signals based on the status of the AC voltage.

2. The cleaner according to claim 1, wherein the voltage selector (14) comprises a unidirectional device configured to interrupt the first DC voltage based on a state of the AC voltage.

3. The cleaner according to claim 1, further comprising: a charger (24) configured to charge the battery (12) using the AC voltage.

4. The cleaner according to claim 1, wherein, when the status of the AC voltage indicates that the AC voltage is not received, the controller (18B) is configured to control the inverter (18A) to generate the at least two phase voltage signals using the selected voltage , and when the status of the AC voltage indicates that the AC voltage is received, the controller (18B) is configured to control the inverter (18A) to drop the selected voltage and to generate the at least two phase voltage signals using the dropped voltage.

5. The cleaner according to claim 1, further comprising: a DC-DC converter (18C) configured to down-convert the first DC voltage and to provide a down-converted DC voltage to the controller (18B).

6. The cleaner according to claim 1, wherein the motor (20) is one of a switched reluctance motor and a resistance-mode motor comprising a commutator coil with a characteristic impedance adapted for generating a rotational force or a driving torque using the first DC voltage.

7. The cleaner according to claim 1, further comprising: an interrupter (26) configured to temporarily disconnect the driver (18) from the motor (20) based on the status of the AC voltage.

8. The cleaner according to claim 7, wherein the interrupter (26) comprises:
a switch timing detector configured to detect a switch time point at which a switch is made between the first DC voltage and the second DC voltage based on the status of the AC voltage; and
a switch configured to electrically disconnect the driver from the motor during a predetermined period from the detected switch time point.

9. The cleaner according to claim 8, wherein the switch comprises: a disconnection period determiner configured to set the predetermined time period in response to a detection result from the switch timing detector; and
a control switch configured to electrically disconnect the driver from the motor in response to an output signal of the disconnection period determiner.

## Patentansprüche

1. Staubsauger, der Folgendes umfasst:
einen Motor (20), der konfiguriert ist, einen Sammelventilator (22) zu drehen;
eine Batterie (12), die konfiguriert ist, eine erste Gleichspannung bereitzustellen;
einen Spannungsumsetzer (10), der konfiguriert ist, eine von einer Leistungsquelle empfangene Wechselspannung in eine zweite Gleichspannung umzusetzen;
einen Spannungsselektor (14), der konfiguriert ist, die erste Gleichspannung oder die zweite Gleichspannung auszuwählen; und
eine Ansteuereinrichtung (18), der konfiguriert ist, den Motor unter Verwendung der ausgewählten Spannung anzusteuern,
**dadurch gekennzeichnet, dass**
die Ansteuereinrichtung (18) konfiguriert ist, die ausgewählte Spannung basierend auf einem Status der Wechselspannung selektiv abfallen zu lassen und den Motor (20) unter Verwendung der selektiv abgefallenen Spannung anzusteuern,
wobei die Ansteuereinrichtung (18) Folgendes umfasst:
einen Wechselrichter (18A), der konfiguriert ist, unter Verwendung der ausgewählten Spannung mindestens zwei Phasenspannungssignale zu erzeugen, die an den Motor (20) angelegt werden sollen; und
eine Steuereinrichtung (18B), die konfiguriert ist, den Wechselrichter (18A) zu steuern, um basierend auf dem Zustand der Wechselspannung eine mittlere Spannung der mindestens zwei Phasenspannungssignale selektiv abfallen zu lassen.

2. Staubsauger nach Anspruch 1, wobei der Spannungsselektor (14) eine unidirektionale Einrichtung umfasst, die konfiguriert ist, die erste Gleichspannung basierend auf dem Status der Wechselspannung zu unterbrechen.

3. Staubsauger nach Anspruch 1, der ferner Folgendes umfasst: ein Ladegerät (24), das konfiguriert ist, die Batterie (12) unter Verwendung der Wechselspannung zu laden.

4. Staubsauger nach Anspruch 1, wobei die Steuereinrichtung (18B) dann, wenn der Status der Wechselspannung anzeigt, dass keine Wechselspannung empfangen worden ist, konfiguriert ist, den Wechselrichter (18A) zu steuern, unter Verwendung der ausgewählten Spannung die mindestens zwei Phasenspannungssignale zu erzeugen, und die Steuereinrichtung (18B) dann, wenn der Status der Wechselspannung anzeigt, dass eine Wechselspannung empfangen worden ist, konfiguriert ist, den Wechselrichter (18A) zu steuern, die ausgewählte Spannung abfallen zu lassen und unter Verwendung der abgefallenen Spannung die mindestens zwei Phasenspannungssignale zu erzeugen.

5. Staubsauger nach Anspruch 1, der ferner Folgendes umfasst: einen Gleichspannungsumsetzer (18C), der konfiguriert ist, die erste Gleichspannung abwärts umzusetzen und der Steuereinrichtung (18B) ein abwärts umgesetztes Gleichspannungssignal bereitzustellen.

6. Staubsauger nach Anspruch 1, wobei der Motor (20) ein geschalteter Reluktanzmotor oder ein Widerstandsmodus-Motor ist, der eine Kommutatorspule mit einer charakteristischen Impedanz umfasst, der dafür ausgelegt ist, unter Verwendung der ersten Gleichspannung eine Drehkraft oder ein Antriebsdrehmoment zu erzeugen.

7. Staubsauger nach Anspruch 1, der ferner Folgendes umfasst: einen Unterbrecher (26), der konfiguriert ist, basierend auf dem Status der Wechselspannung die Ansteuereinrichtung (18) zeitweise von dem Motor (20) zu trennen.

8. Staubsauger nach Anspruch 7, wobei der Unterbrecher (26) Folgendes umfasst:
einen Schaltzeitdetektor, der konfiguriert ist, basierend auf dem Status der Wechselspannung einen Schaltzeitpunkt, an dem ein Schaltvorgang zwischen der ersten Gleichspannung und der zweiten Gleichspannung durchgeführt worden ist, zu detektieren; und
einen Schalter, der konfiguriert ist, die Ansteuereinrichtung während einer vorgegebenen Zeitdauer von dem detektierten Schaltzeitpunkt von dem Motor elektrisch zu trennen.

9. Staubsauger nach Anspruch 8, wobei der Schalter Folgendes umfasst:
einen Trennungszeitdauerbestimmer, der konfiguriert ist, die vorgegebene Zeitdauer als Reaktion auf ein Detektionsergebnis von dem Schaltzeitdetektor einzustellen; und
einen Steuerschalter, der konfiguriert ist, als Reaktion auf ein Ausgangssignal von dem Trennungszeitdauerbestimmer die Ansteuereinrichtung von dem Motor zu trennen.

## Revendications

1. Appareil de nettoyage, comprenant :
un moteur (20) configuré pour faire tourner un ventilateur de collecte (22) ;
une batterie (12) configurée pour fournir une première tension CC ;
un convertisseur de tension (10) configuré pour convertir une tension CA reçue d'une source d'alimentation électrique en une deuxième tension CC ;
un sélectionneur de tension (14) configuré pour sélectionner l'une de la première tension CC et de la deuxième tension CC ; et
un circuit d'attaque (18) configuré pour actionner le moteur en utilisant la tension sélectionnée,
**caractérisé en ce que**
le circuit d'attaque (18) est configuré pour abaisser sélectivement la tension sélectionnée sur la base d'un statut de la tension CA et actionner le moteur (20) en utilisant la tension sélectivement abaissée,
le circuit d'attaque (18) comprend :
un inverseur (18A) configuré pour générer au moins deux signaux de tension de phase à fournir au moteur (20) en utilisant la tension sélectionnée ; et
un organe de commande (18B) configuré pour commander à l'inverseur (18A) d'abaisser sélectivement une tension moyenne des au moins deux signaux de tension de phase sur la base du statut de la tension CA.

2. Appareil de nettoyage selon la revendication 1, dans lequel le sélectionneur de tension (14) comprend un dispositif unidirectionnel configuré pour interrompre la première tension CC sur la base d'un état de la tension CA.

3. Appareil de nettoyage selon la revendication 1, comprenant en outre : un chargeur (24) configuré pour charger la batterie (12) en utilisant la tension CA.

4. Appareil de nettoyage selon la revendication 1, dans lequel, lorsque le statut de la tension CA indique que la tension CA n'est pas reçue, l'organe de commande (18B) est configuré pour commander à l'inverseur (18A) de générer les au moins deux signaux de tension de phase en utilisant la tension sélectionnée, et, lorsque le statut de la tension CA indique que la tension CA est reçue, l'organe de commande (18B) est configuré pour commander à l'inverseur (18A) d'abaisser la tension sélectionnée et de générer les au moins deux signaux de tension de phase en utilisant la tension abaissée.

5. Appareil de nettoyage selon la revendication 1, comprenant en outre : un convertisseur CC-CC (18C) configuré pour effectuer la conversion-abaissement de la première tension CC et fournir une tension CC convertie-abaissée à l'organe de commande (18B).

6. Appareil de nettoyage selon la revendication 1, dans lequel le moteur (20) est l'un d'un moteur à reluctance commutée et d'un moteur à mode de résistance comprenant une bobine de commutateur avec une impédance caractéristique adaptée pour générer une force de rotation ou un couple d'actionnement en utilisant la première tension CC.

7. Appareil de nettoyage selon la revendication 1, comprenant en outre : un interrupteur (26) configuré pour déconnecter provisoirement le circuit d'attaque (18) du moteur (20) sur la base du statut de la tension CA.

8. Appareil de nettoyage selon la revendication 7, dans lequel l'interrupteur (26) comprend :
un détecteur de synchronisation de commutation configuré pour détecter un point de commutation dans le temps auquel une commutation est effectuée entre la première tension CC et la deuxième tension CC sur la base du statut de la tension CA ; et
un commutateur configuré pour déconnecter électriquement le circuit d'attaque du moteur au cours d'une période prédéterminée à partir du point de commutation dans le temps détecté.

9. Appareil de nettoyage selon la revendication 8, dans lequel le commutateur comprend :
un déterminateur de période de déconnexion configuré pour régler la période dans le temps prédéterminée en réponse à un résultat de détection provenant du détecteur de synchronisation de commutation ; et
un commutateur de commande configuré pour déconnecter électriquement le circuit d'attaque du moteur en réponse à un signal de sortie du déterminateur de période de déconnexion.
